(19) Europäisches Patentamt / European Patent Office / Office européen des brevets

(11) **EP 4 052 883 A1**

(12) **DEMANDE DE BREVET EUROPEEN**

(43) Date de publication:
**07.09.2022 Bulletin 2022/36**

(21) Numéro de dépôt: **21160550.6**

(22) Date de dépôt: **03.03.2021**

(51) Classification Internationale des Brevets (IPC):
**B29C 45/37** (2006.01)    **A44C 5/00** (2006.01)

(52) Classification Coopérative des Brevets (CPC):
**B29C 45/372; A44C 5/0053; B29C 45/2673;**
B29C 33/0011; B29C 33/0016; B29C 39/026;
B29C 2045/1477; B29K 2021/00; B29L 2031/7276

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **ROLEX SA
1211 Genève 26 (CH)**

(72) Inventeurs:
• **CALAME, Florian
CH 1066 Epalinges (CH)**
• **CELANT, Benjamin
CH 1211 Genève 26 (CH)**

(74) Mandataire: **Moinas & Savoye SARL
27, rue de la Croix-d'Or
1204 Genève (CH)**

(54) **PROCÉDÉ DE FABRICATION D'UN COMPOSANT HORLOGER**

(57)    Procédé de fabrication d'un insert structuré (10) pour un moule de fabrication d'un composant horloger ou de joaillerie, notamment pour la fabrication d'un brin de bracelet, caractérisé en ce qu'il comprend les étapes suivantes :

∘ Se munir (E1) d'un élément modèle (50) comprenant une surface structurée (51) avec un motif à reproduire sur une surface d'un composant horloger;
∘ Recouvrir (E2) ladite surface structurée (51) de l'élément modèle (50) avec une résine de moulage apte à reproduire un motif en négatif dudit motif de la surface structurée, et laisser solidifier la résine de moulage pour obtenir un insert structuré (10);
∘ Séparer (E3) l'insert structuré (10) de l'élément modèle (50), cet insert structuré (10) comprenant une surface comprenant ledit motif en négatif;
∘ Optionnellement, découper l'insert structuré (10) au format correspondant à au moins une partie du composant horloger à fabriquer.

*Figure 3c*

EP 4 052 883 A1

**Description**

La présente invention concerne un procédé de fabrication d'un insert structuré pour un moule de fabrication d'un composant horloger ou de joaillerie. Elle porte aussi sur un procédé de fabrication d'un composant horloger ou de joaillerie qui utilise un tel insert structuré. Elle porte aussi sur un composant horloger en tant que tel, notamment un brin de bracelet, particulièrement un brin de bracelet en élastomère, obtenu par un tel procédé.

Il est courant dans l'horlogerie de former un brin de bracelet à partir d'un matériau élastomère. Il est souhaitable de pouvoir former une surface d'un tel brin de bracelet présentant un aspect choisi, particulièrement attractif.

Pour atteindre un tel résultat, il est connu de fabriquer un brin de bracelet par l'intermédiaire d'un moule métallique en acier dont la géométrie forme directement une texture prédéfinie sur le brin de bracelet. Une telle approche présente le premier inconvénient d'un manque de versatilité, puisque le changement d'aspect du bracelet nécessite le changement du moule. Une telle solution n'est donc pas adaptée à la fabrication de petites séries. Elle présente aussi le deuxième inconvénient de ne pas permettre la réalisation de toute texture, ou avec une précision insuffisante. Enfin, la réalisation d'une surface texturée sur le moule est souvent complexe et délicate, et une telle surface ne peut pas être réparée en cas d'altération, ce qui représente un troisième inconvénient de cette solution.

Une autre approche complémentaire consiste à modifier l'aspect de la surface du brin de bracelet après sa sortie d'un moule, par une ou plusieurs étapes supplémentaires de finition, par exemple par une étape de calandrage. Une telle approche complexifie de même le procédé par l'ajout d'une ou de plusieurs étapes supplémentaires. De plus, elle ne permet pas de former tous types de textures. Ainsi, la présente invention a pour objet d'améliorer les procédés connus de fabrication d'un composant d'horlogerie ou de joaillerie, et notamment d'atteindre tout ou partie des objets suivants.

L'invention a pour premier objet de pouvoir fabriquer un composant horloger ou de joaillerie présentant une fonctionnalité technique définie, notamment un caractère hydrophile ou hydrophobe, et/ou d'aspect esthétique attractif, notamment présentant une surface structurée avec un motif choisi.

L'invention a pour deuxième objet de pouvoir fabriquer un composant horloger ou de joaillerie comprenant une surface structurée en élastomère.

L'invention a pour troisième objet de pouvoir fabriquer un composant horloger ou de joaillerie comprenant une surface structurée de forme complexe.

L'invention a pour quatrième objet de pouvoir fabriquer un composant horloger ou de joaillerie comprenant une surface structurée adaptée à des petites séries de fabrication, notamment dans le but de pouvoir changer facilement le motif de la surface structurée du composant horloger à fabriquer.

A cet effet, l'invention repose sur un procédé de fabrication d'un insert structuré pour un moule de fabrication d'un composant horloger ou de joaillerie, notamment pour la fabrication d'un brin de bracelet, caractérisé en ce qu'il comprend les étapes suivantes :

   ◦ Se munir d'un élément modèle comprenant une surface structurée avec un motif à reproduire sur une surface d'un composant horloger;
   ◦ Recouvrir ladite surface structurée de l'élément modèle avec une résine de moulage apte à reproduire un motif en négatif dudit motif de la surface structurée, et laisser solidifier la résine de moulage pour obtenir un insert structuré ;
   ◦ Séparer l'insert structuré de l'élément modèle, cet insert structuré comprenant une surface comprenant ledit motif en négatif;
   ◦ Optionnellement, découper l'insert structuré au format correspondant à au moins une partie du composant horloger à fabriquer.

L'invention porte aussi sur un composant horloger en matériau élastomère, notamment brin de bracelet, caractérisé en ce qu'il comprend une partie monobloc et optionnellement d'un seul tenant, comprenant une surface structurée qui comprend tout ou partie des caractéristiques suivantes :

   ◦ au moins un relief dont la hauteur, mesurée dans la direction perpendiculaire à ladite surface structurée, est comprise entre 1 nm et 2 mm, voire entre 1 nm et 500 $\mu$m, voire entre 1 nm et 10 $\mu$m, voire entre 1 nm et 10 nm ; et/ou
   ◦ plusieurs reliefs qui se croisent, et/ou
   ◦ au moins une cavité dont l'ouverture est plus étroite que sa largeur ou comprenant une section inférieure parallèle à la surface structurée d'aire plus importante qu'une autre section parallèle positionnée au-dessus de la section inférieure.

L'invention porte aussi sur un ensemble comprenant un élément modèle et un tel composant horloger, caractérisé en ce que le composant horloger comprend une surface structurée qui reproduit une surface structurée de l'élément modèle avec une résolution inférieure ou égale à 1 $\mu$m, voire inférieure ou égale à 100 nm, voire inférieure ou égale à 10 nm, voire inférieure ou égale à 1 nm.

L'invention est plus particulièrement définie par les revendications.

Ces objets, caractéristiques et avantages de la présente invention seront exposés en détail dans la description suivante de modes de réalisation particuliers faits à titre non-limitatif en relation avec les figures jointes parmi lesquelles :

La figure 1 représente schématiquement les étapes d'un procédé de fabrication d'un insert structuré selon un mode de réalisation de l'invention.

Les figures 2a à 2d représentent des vues en coupe de cavités formées dans la surface d'un élément modèle selon des exemples de mise en œuvre du procédé de l'invention.

Les figures 3a à 3c représentent schématiquement les étapes d'un procédé de fabrication d'un composant horloger selon un mode de réalisation de l'invention.

La figure 4 représente un élément modèle utilisé par le procédé selon le mode de réalisation de l'invention.

La figure 5 représente une vue agrandie de la surface structurée de l'élément modèle de la figure 4.

La figure 6 représente une vue en perspective de dessus d'un brin de bracelet fabriqué selon le mode de réalisation de l'invention.

La figure 7 représente une vue agrandie de la surface structurée du brin de bracelet de la figure 6.

La figure 8 représente un élément modèle selon un autre exemple et un brin de bracelet correspondant résultant du procédé de fabrication de l'invention.

La figure 9 représente un élément modèle selon encore un autre exemple de mise en œuvre du procédé de fabrication de l'invention.

L'invention atteint les objets recherchés par la fabrication intermédiaire d'un insert structuré, destiné à être inséré dans un moule de fabrication d'un composant horloger ou de joaillerie pour former une surface structurée du composant horloger qui est fabriqué dans un tel moule.

Un mode de réalisation de l'invention va maintenant être décrit dans le cadre de la fabrication d'un bracelet en élastomère. Il peut naturellement être utilisé pour la fabrication d'un autre composant horloger ou de joaillerie à partir d'élastomère.

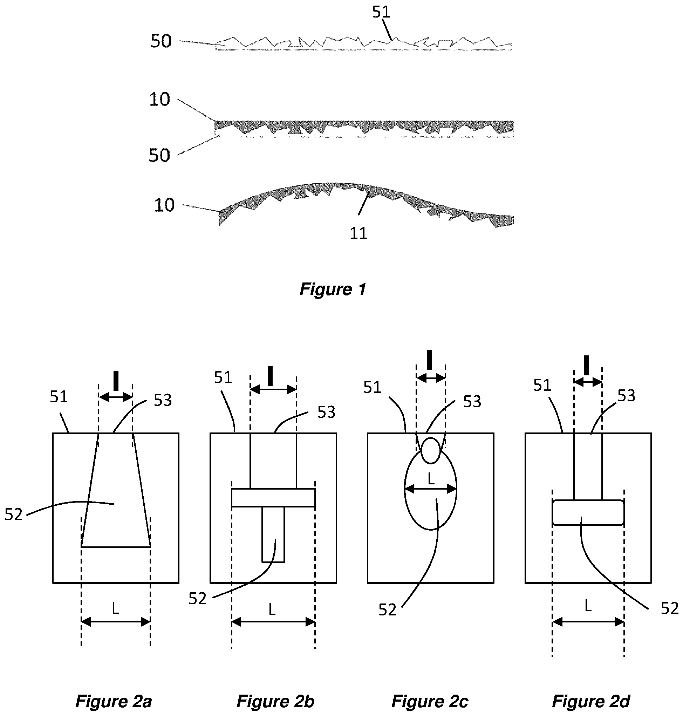

Le procédé de fabrication d'un composant horloger comprend une première phase de fabrication d'un insert structuré pour moule de fabrication d'un composant horloger, représentée schématiquement par la figure 1.

Le procédé comprend une première étape consistant à se munir E1 d'un élément modèle 50 comprenant une surface structurée 51 avec un motif à reproduire. Le motif de la surface structurée de cet élément modèle est appelé « motif maître » : il s'agit d'un motif existant qu'on souhaite reproduire de manière identique, avec une très grande précision, sur une surface d'un brin de bracelet. L'élément modèle peut aussi être appelé par sa dénomination anglaise de « master ».

On entend par surface structurée une surface qui présente des reliefs, positifs et/ou négatifs, c'est-à-dire en saillie ou en creux relativement à ladite surface. Ces reliefs forment un motif maître de la surface structurée. De plus, cette surface structurée peut être plane ou non, par exemple courbée. Comme cela ressortira de la description ci-dessous, le procédé selon l'invention permet avantageusement de reproduire une grande variété de motifs maîtres, y compris des motifs complexes et/ou impliquant des dimensions très faibles, notamment micrométriques, voire nanométriques. Naturellement, l'invention ne porte pas sur le motif maître en tant que tel, qui peut être quelconque.

A titre d'exemple, le motif maître peut être un motif naturel, comme celui présent à la surface d'une peau animale, d'un cuir, d'une peau d'alligator, d'une écorce, d'une feuille, de microcristaux, notamment des cristaux de carbure de silicium ou des cristaux de ruthénium, etc. Alternativement, il peut être non naturel, artificiel, et réalisé sur un substrat par toute technique connue comme un usinage traditionnel, un gravage laser, etc. Il peut par exemple être formé par un métal texturé par abrasion, notamment en formant un soleillage ou toute autre forme de satinage, par gravage traditionnel, par laser ou par électrochimie, ou par une plaquette présentant des décors électroformés obtenus par déposition d'un métal dans les cavités d'une résine photosensible photopolymérisée, ou par une surface d'une plaquette de silicium, ou par un tissage de fibres, etc.

Comme susmentionné, le motif maître peut être complexe. A titre d'exemple, il peut comprendre des portions creuses formant des cavités de forme complexe, présentant notamment une ouverture plus étroite que sa largeur ou plus largement comprenant une section inférieure parallèle à la surface structurée d'aire plus importante qu'une autre section parallèle superposée au-dessus de la section inférieure, c'est-à-dire présenter une forme telle qu'elle présente un goulet d'étranglement lors du démoulage de la cavité.

Les figures 2a à 2d illustrent des exemples de cavités complexes vues en coupe, dans un plan perpendiculaire à la surface structurée 51 d'un élément modèle, laquelle surface structurée 51 comprend ainsi au moins une telle cavité 52 complexe, voire une multitude de cavités complexes, identiques ou différentes. Une telle cavité 52 complexe comprend une ouverture 53 débouchant sur la surface structurée 51, puis s'étend dans la profondeur de l'élément modèle. Cette cavité 52 complexe comprend au moins une section, comme représenté sur ces figures, telle que la plus grande largeur L de cette section dans un plan parallèle à la surface structurée 51 est plus grande que la largeur I de l'ouverture 53. Plus généralement, une cavité complexe peut comprendre une première section parallèle à la surface structurée 51 de l'élément modèle d'aire plus importante qu'une deuxième section parallèle superposée positionnée au-dessus de cette première section parallèle, c'est-à-dire plus proche de l'ouverture 53. La spécificité de ces formes de cavité provient du fait qu'elles induisent une complexité dans une étape de démoulage d'un procédé d'injection, qui comprend l'injection d'un matériau au sein d'une telle cavité, puisque la cavité comprend une section étroite formant un goulet d'étranglement lors du retrait du matériau injecté solidifié.

La complexité peut aussi provenir d'un nombre très important de reliefs, en saillie et/ou en creux, qui peuvent être juxtaposés ou se croiser.

Enfin, la complexité peut provenir de la résolution du motif maître, qui peut impliquer des très petites dimensions. A titre d'exemple, la surface structurée 51 de l'élément modèle peut comprendre au moins un relief de hauteur H, mesurée dans la direction perpendiculaire à la surface structurée 51, comprise entre 1 nm et 2 mm, voire entre 1 nm et 500 $\mu$m, voire entre 1 nm et 10 $\mu$m, voire entre 1 nm et 10 nm.

Comme l'invention permet la reproduction de motifs complexes, elle présente l'avantage d'être compatible avec la reproduction de textures très variées. Elle reste naturellement compatible avec toute autre texture que les exemples illustrés, et peut aussi être implémentée pour reproduire des textures simples.

Le procédé comprend ensuite une deuxième étape consistant à recouvrir E2 ladite surface structurée de l'élément modèle 50 avec une résine de moulage, apte à reproduire un motif en négatif dudit motif maître de l'élément modèle, après solidification de la résine de moulage, pour obtenir un insert structuré 10.

Avantageusement, la résine de moulage présente une viscosité avant solidification à température et pression ambiante comprise entre 0.5 et 70000 Pa.s$^{-1}$, voire entre 0.5 et 30000 Pa.s$^{-1}$, voire entre 0.5 et 1000 Pa.s$^{-1}$. Un tel choix favorise son infiltration dans des cavités, y compris des cavités complexes, de la surface structurée de l'élément modèle 50. Elle pénètre ainsi dans les moindres recoins de la surface structurée de l'élément modèle 50, pour reproduire avec une très grande précision la forme de cette surface structurée. En se solidifiant, tous les détails de la surface sur laquelle la résine de moulage a été appliquée sont reproduits très précisément. La précision de la reproduction peut être de l'ordre du micromètre, voire de l'ordre du nanomètre.

A titre d'exemple, la résine de moulage comprend du polyuréthane, du latex, de la résine acrylique, du fluoro-élastomère comme le FKM, du PDMS (PolyDimethylSiloxane), une résine époxy, ou du silicone bi-composant, notamment à deux composants vulcanisant par addition, notamment de la famille des vinyl-polydimethyl-siloxanes, ou notamment comprenant du vinyle, de l'acide silicique et des matières d'agrégation. La résine de moulage peut de plus comprendre un ou plusieurs additifs choisis parmi un adjuvant, une matière d'agrégation, et un colorant.

De manière alternative, une résine plus visqueuse, voire une matière pâteuse ou solide, comme un caoutchouc fluorocarbone (FKM) cru, peut également être utilisée. Dans un tel cas, une pression importante sera avantageusement appliquée sur cette résine pour lui permettre de s'infiltrer dans tous les reliefs, notamment les cavités, de l'élément modèle. Un compromis sera recherché pour définir la pression appliquée pour atteindre la reproduction précise du motif maître sans détériorer l'élément modèle.

Après solidification, la résine de moulage forme un insert structuré 10. De préférence, cet insert structuré 10 est souple. Particulièrement, sa souplesse est adaptée à son démoulage de l'élément modèle 50, notamment dans le cas où cet élément modèle comprend un motif avec des cavités complexes. Avantageusement, la résine de moulage présente un retrait faible voire nul, afin de reproduire et de conserver fidèlement les caractéristiques du motif à reproduire. Par exemple le retrait est inférieur ou égal à 2 ‰, voire inférieur ou égal à 1 ‰. La résine de moulage est choisie de sorte à atteindre, une fois solidifiée, une souplesse compatible avec la contrainte d'extraction, calculée grâce à la formule suivante :

$$1 - \left[ \frac{\text{Dimension Minimale de l'orifice d'extraction}}{\text{Dimension Maximale interne}} \right] = \text{Contrainte d'Extraction (en \%)}$$

Plus la contrainte d'extraction est élevée, plus la résine de moulage devra être souple et élastique pour que l'insert structuré résultant puisse être retiré sans dégradation, tout en conservant l'intégralité de la texture à répliquer. Autrement dit, la résine de moulage est choisie de sorte à former un insert structuré 10 qui peut être séparé de l'élément modèle sans détérioration de l'élément modèle ni de l'insert structuré.

De préférence, la solidification de la résine de moulage, à l'issue de laquelle l'empreinte du motif maître est considérée comme faite, correspond à sa polymérisation. Elle comprend deux étapes : la prise de la résine, suite à laquelle la résine est sèche au toucher, puis le durcissement de la résine, suite auquel les propriétés mécaniques finales de la résine sont atteintes.

La cinétique de polymérisation de la résine de moulage pour la prise d'empreinte est en général rapide. Notamment, la durée de polymérisation à température ambiante peut être comprise entre 1 et 30 minutes, de préférence entre 1 et 15 minutes. A titre d'exemple, dans le cas particulier d'utilisation du silicone à deux composants, la durée de prise à température ambiante (20°C) est comprise entre 15 et 90 secondes. La durée de durcissement est comprise entre 1 et 10 minutes. Ainsi le choix de ce silicone comme résine de moulage est particulièrement avantageux : sa durée de solidification est courte et ce silicone peut être mis en œuvre avec une installation très simple.

Le procédé comprend ensuite une troisième étape consistant à séparer E3 l'insert structuré 10 de l'élément modèle 50, cet insert structuré 10 comprenant une surface structurée 11 reproduisant le motif maître en négatif.

Comme mentionné précédemment, la résine de moulage solidifiée conserve une souplesse qui lui permet un démoulage aisé de l'élément modèle 50, sans détérioration du motif de la surface structurée 11. L'insert structuré 10 comprend ainsi une surface structurée 11, qui correspond à la reproduction en négatif à l'identique de la surface structurée 51 de l'élément modèle 50.

Au préalable, l'élément modèle est de préférence nettoyé avant l'application de la résine de moulage pour présenter une surface de réception, comprenant la surface structurée à reproduire, parfaitement propre au moment de l'application de la résine de moulage. Optionnellement, cette surface peut aussi être revêtue d'un agent démoulant. Ainsi, la séparation de l'insert structuré 10 de l'élément modèle 50 est facilitée, l'insert structuré se détachant facilement, sans adhérer à l'élément modèle. La résine de moulage ne laisse donc pas de résidu sur les surfaces de l'élément modèle, et conserve une surface structurée intacte, non détériorée, reproduisant parfaitement la surface structurée de l'élément modèle.

Avantageusement, l'insert structuré est résistant à la compression tout en restant assez souple, ce qui se traduit par une dureté comprise entre 20 et 90 Shore A, voire entre 20 et 40 Shore A ou entre 50 et 70 Shore A ou entre 80 et 90 Shore A. Comme précisé plus haut, cette résistance, alliée à la souplesse de l'insert, est adaptée à l'élément modèle utilisé.

De plus, l'insert structuré 10 obtenu est suffisamment souple pour pouvoir épouser la forme éventuellement non plane de la surface du moule sur laquelle il est destiné à être positionné, comme cela sera détaillé par la suite. Pour cela, le module apparent de l'insert structuré 10 pour une déformation de 100% est avantageusement inférieur à 300 MPa, voire inférieur à 50 MPa, voire inférieur à 10 MPa. D'autre part, la résistance au déchirement sans entaille selon la norme ISO 34-1 B(a) de l'insert structuré 10 est de préférence supérieure ou à 5, voire supérieure à 10.

Selon un mode de réalisation avantageux, après cette étape de démoulage de la résine de moulage, l'insert structuré 10 est directement obtenu. Optionnellement, le procédé comprend une étape supplémentaire de découpe de la résine de moulage séparée de l'élément modèle pour former l'insert structuré dans son format final.

D'autre part, le procédé peut comprendre une étape supplémentaire optionnelle de dépôt d'un revêtement d'un agent démoulant sur l'insert structuré 10, notamment par enduction, par dépôt chimique en phase vapeur (CVD), par dépôt physique en phase vapeur (PVD), par dépôt de couche atomique (ALD), par dépôt sol-gel, par dépôt SAM (Self Assembled Monolayer), ou par dépôt d'un revêtement fluoré sur l'insert structuré, par exemple en un matériau parmi le polytétrafluoroéthylène (PTFE), l'éthylène propylène fluoré (FEP), ou le perfluoroalkoxy (PFA).

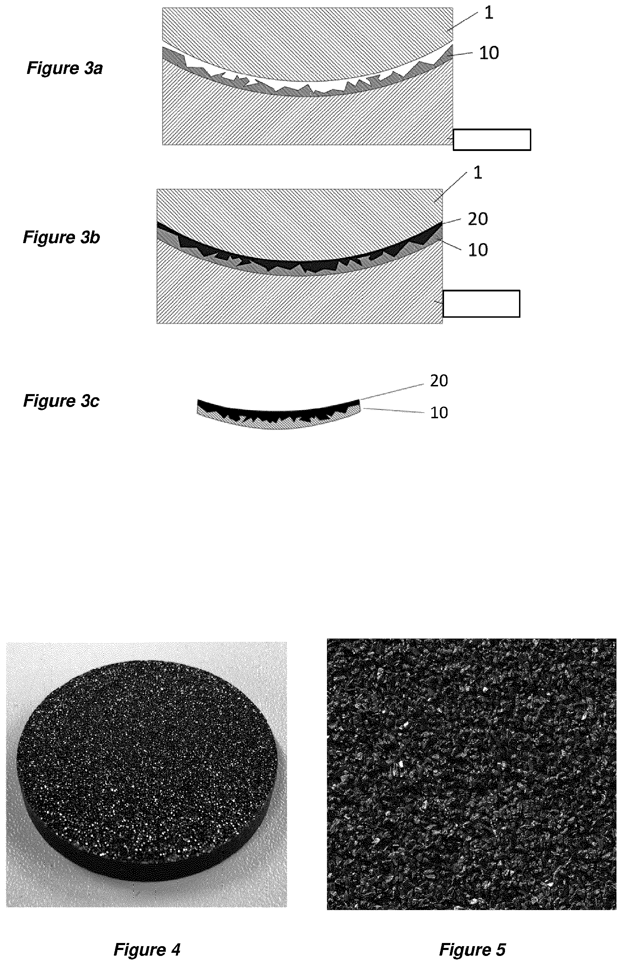

Le procédé de fabrication d'un composant horloger comprend ensuite une deuxième phase de fabrication d'un composant horloger en tant que tel, représentée par les figures 3a à 3c, qui utilise l'insert structuré 10 fabriqué par le procédé de fabrication de l'insert structuré décrit précédemment, qui forme donc la première phase du procédé de fabrication d'un composant horloger.

Ce procédé comprend une quatrième étape consistant à positionner E4 l'insert structuré 10 dans un moule 1 de fabrication d'un composant horloger, notamment un moule métallique, par exemple en acier, comme représenté en figure 3a. Avantageusement, ce positionnement est réalisé par simple insertion dans un logement prévu à cet effet dans le moule, de manière suffisamment ajustée pour induire un maintien de l'insert structuré 10. Ce dernier est donc avantageusement maintenu dans le moule sans collage, ni fixation. Ce logement du moule se présente comme une cavité dont la forme et l'épaisseur correspondent à celles de l'insert structuré.

L'insert structuré 10 peut présenter toute forme, et occuper tout ou partie de la surface du moule. De plus, il présente une souplesse suffisante pour épouser parfaitement la forme du logement prévu pour le recevoir, sans laisser d'interstices. Son matériau lui permet de plus de ne pas adhérer au moule. Il pourra ainsi être démoulé facilement, sans besoin d'ajout d'un agent démoulant sur la surface du moule.

Naturellement, selon une réalisation avantageuse, l'insert structuré 10 peut être fabriqué dans la première phase selon une forme au repos (correspondant à celle de l'élément modèle) qui correspond à celle du logement du moule, de sorte qu'il sera parfaitement adapté à ce logement sans besoin (ou peu) de le déformer.

Le procédé comprend ensuite une étape consistant à remplir E5 le moule 1 de fabrication incluant l'insert structuré 10 d'un matériau du composant, comme représenté par la figure 3b, incluant le remplissage du motif en négatif de la surface structurée de l'insert structuré 10, puis à laisser solidifier le matériau du composant pour obtenir une ébauche 20 du composant horloger comprenant une surface structurée comprenant la reproduction à l'identique du motif maître de l'élément modèle.

Avantageusement, le matériau du composant est un élastomère ou à base d'élastomère, c'est-à-dire comprenant au moins 50% en poids d'élastomère. Notamment, le matériau élastomère peut être un fluoro-élastomère (FKM, FFKM ou FEPM), ou un caoutchouc naturel (NR) ou synthétique (SBR, HNBR, EPDM). En variante, le matériau du composant est un polymère, thermoplastique ou thermodurci, sous réserve que la géométrie de la structure permette de séparer l'insert du composant sans dégrader ce dernier. Le choix du matériau du composant est tel qu'il est adapté à une forme spécifique plus ou moins complexe du composant horloger à fabriquer, les formes les plus complexes exigeant l'utilisation d'un matériau du composant aux propriétés mécaniques les plus performantes.

Le composant horloger est ainsi avantageusement flexible. De plus, il peut présenter une forme non plane au repos, induite par la forme du moule de fabrication. Cette forme est avantageusement courbée ou arquée, notamment concave ou convexe. Le composant horloger peut être rigide au repos, c'est-à-dire conserver une forme prédéfinie au repos, qui peut être avantageusement modifiée par déformation élastique, notamment dans le cas d'un bracelet, du fait du matériau flexible utilisé.

En remarque, la résine de moulage de l'insert structuré est naturellement choisie pour être compatible avec les conditions de remplissage dans le moule 1 du matériau du composant. Notamment, l'insert structuré résiste aux conditions de vulcanisation de l'élastomère formant le composant horloger. Pour cela, il résiste à des températures de 160°C, voire pouvant aller jusqu'à 180°C, voire jusqu'à 250°C, durant au moins 15 minutes et de préférence durant plusieurs heures. À ces températures, l'insert structuré supporte de plus sans déformation des pressions comprises entre 80 bar et 150 bar, voire entre 80 bar et 90 bar. De plus, l'insert structuré supporte par exemple avantageusement plusieurs cycles de vulcanisation d'un élastomère, de 5 à 15 minutes chacun.

L'étape consistant à remplir E5 le moule de fabrication comprend donc avantageusement le coulage ou l'injection du matériau du composant, et permet de former un composant horloger comprenant une surface structurée d'un seul tenant.

Le procédé comprend ensuite une étape consistant à retirer E6 l'ébauche 20 du composant horloger du moule.

Avantageusement, dans cette étape de retrait, l'insert structuré 10 reste solidarisé à ladite ébauche 20, du fait de leur imbrication au niveau de la surface structurée, et du fait qu'il n'y a pas d'accroche de l'insert structuré sur le moule de fabrication, comme représenté par la figure 3c. Dans ce cas, l'insert structuré 10 remplit une deuxième fonction de protection de la surface structurée de l'ébauche 20 du composant horloger. Cette ébauche 20 peut en effet subir une ou plusieurs autres étapes consistant à terminer E7 le composant, optionnelles, comme par exemple un ébavurage, un sablage, un marquage, et/ou une décoration, etc., durant lesquelles sa surface structurée reste parfaitement intacte grâce à la protection de l'insert structuré 10. Le procédé comprend ensuite une étape consistant à séparer E8 l'ébauche 20 de composant horloger de l'insert structuré 10 pour obtenir le composant horloger.

En alternative, l'insert structuré 10 peut être séparé de l'ébauche 20 lors de l'étape consistant à retirer E6 l'ébauche 20 du moule 1. Cet insert structuré 10 peut être réutilisé au sein du moule pour fabriquer une nouvelle ébauche et un autre composant horloger identique.

L'invention atteint ainsi les objets recherchés et présente plus généralement les avantages suivants :

- Le procédé de fabrication est simple à mettre en œuvre et peu onéreux ; il n'est par exemple pas nécessaire de former une texture complexe et qui serait par ailleurs peu durable sur une surface d'un moule en acier ;
- Elle permet d'obtenir un composant horloger comprenant une réplique très précise d'un motif d'un élément modèle ;
- Le procédé est compatible avec la fabrication de petites séries, puisqu'un insert structuré est facile à fabriquer, et puisque des inserts structurés de motifs différents peuvent être introduits dans le même moule de fabrication.

L'invention porte aussi sur un insert structuré pour moule de fabrication d'un composant horloger, caractérisé en ce qu'il se présente en résine et comprend une surface structurée comprenant un motif en négatif d'un motif à reproduire sur un composant horloger.

Un tel insert structuré peut être caractérisé en ce que ledit motif négatif comprend tout ou partie des caractéristiques suivantes :

- au moins un relief de hauteur, mesurée dans la direction perpendiculaire à ladite surface structurée, comprise entre 1 nm et 2 mm, voire entre 1 nm et 500 $\mu$m, voire entre 1 nm et 10 $\mu$m, voire entre 1 nm et 10 nm ; et/ou
- plusieurs reliefs qui se croisent, et/ou

- au moins une cavité dont l'ouverture est plus étroite que sa largeur ou comprenant une section inférieure d'aire plus importante qu'une autre section positionnée au-dessus de la section inférieure.

Cet insert structuré peut être souple, de module apparent pour une déformation de 100% inférieur ou égal à 300 MPa, voire inférieur ou égal à 50 MPa, voire inférieur ou égal à 10 MPa.

Il peut présenter une dureté comprise en 20 et 90 Shore A, voire entre 20 et 40 Shore A ou entre 50 et 70 Shore A ou entre 80 et 90 Shore A. Sa résistance au déchirement sans entaille peut être supérieure ou égale à 5, voire supérieure ou égale à 10.

Il peut résister à une température de 160°C, voire à une température de 180°C, voire à une température de 250°C, durant au moins 15 minutes voire au moins une ou deux heures. Il peut résister sans déformation à ces températures à une pression maximale comprise entre 80 bar et 150 bar.

L'insert structuré peut être à usage unique ou servir pour la fabrication d'un faible nombre de composants horlogers, par exemple jusqu'à 50 composants horlogers.

L'invention porte aussi sur un composant horloger ou de joaillerie en tant que tel obtenu par le procédé selon l'invention. Comme mentionné, un tel composant horloger peut être un bracelet. En variante, il peut être tout composant d'habillage d'une montre bracelet, tel qu'une lunette de montre ou une carrure.

Un tel composant horloger présente donc une surface structurée, définissant un motif qui peut être complexe. Ce motif peut par exemple comprendre au moins une cavité dont l'ouverture est plus étroite que la largeur ou comprenant une section inférieure d'aire plus importante qu'une autre section superposée au-dessus de la section inférieure. Il peut comprendre au moins un relief de hauteur, mesurée dans la direction perpendiculaire à ladite surface structurée, comprise entre 1 nm et 2 mm, voire entre 1 nm et 500 $\mu$m, voire entre 1 nm et 10 $\mu$m, voire entre 1 nm et 10 nm. Le composant horloger peut être en tout ou partie monobloc, voire même d'un seul tenant. Le composant horloger peut comporter un ou plusieurs inserts telle qu'une lame de renfort comme décrit dans le document EP2783592A1. La surface structurée peut comprendre plusieurs reliefs qui se croisent.

L'invention porte aussi sur une montre bracelet comprenant au moins un composant horloger tel que décrit ci-dessus.

L'invention porte aussi sur un ensemble comprenant un élément modèle et un composant horloger, qui comprend une surface structurée qui reproduit une surface structurée de l'élément modèle avec une résolution inférieure ou égale à 1 $\mu$m, voire inférieure ou égale à 100 nm, voire inférieure ou égale à 10 nm, voire inférieure ou égale à 1 nm.

Différents exemples de fabrication de bracelets par le procédé selon l'invention vont être présentés pour illustrer les résultats

Selon un premier exemple, le motif « maître » choisi est formé par des cristaux de carbure de silicium, par exemple formé à partir d'une surface supérieure d'une rondelle de carbure de silicium telle que représentée par la figure 4, qui représente ainsi l'élément modèle choisi. La figure 5 représente une vue agrandie de cette surface supérieure, permettant de visualiser sa texture. La surface structurée considérée s'étend dans un plan. Elle est nettoyée et dégraissée, puis séchée. Un silicone à deux composants, contenant du vinyle, de l'acide silicique et des matières d'agrégation, est utilisé pour réaliser l'insert structuré. Ce matériau peut être celui connu par sa dénomination commerciale de Plastiform™ F50 ou Plastiform™ F85. Les deux composants du silicone sont mélangés au sein d'un pistolet doseur, qui permet de déposer le mélange sur une partie de la surface structurée de l'élément modèle, c'est-à-dire la surface supérieure de la rondelle de carbure de silicium. La résine est déposée sur cette surface en une couche d'épaisseur de 0.5 mm. Une fois les deux composants mélangés, le silicone polymérise à température ambiante en deux minutes. Il est très fluide mais s'avère sec au toucher très rapidement après application. Son temps de prise est d'environ 20 secondes. Lorsque le silicone est durci, il est détaché de la rondelle et découpé aux dimensions de la partie centrale d'un bracelet de montre bracelet pour former un insert structuré souple. Plus précisément, l'insert structuré ne comprend pas une forme figée au repos, il est suffisamment souple pour épouser la forme d'un support sur lequel il est positionné. Avantageusement, l'insert structuré présente une épaisseur maximale comprise entre 0.2 mm et 2 mm, voire entre 0.2 mm et 1 mm. L'insert est ensuite placé dans un moule d'injection de brin de bracelet. Il épouse parfaitement le logement courbé réalisé dans le moule pour le recevoir.

Un matériau élastomère, de préférence un élastomère fluoré (FKM), est ensuite injecté dans le moule, avec une pression de 80 bars, à une température de 80°C. La vulcanisation à 180°C est ensuite effectuée en 15 minutes, puis le moule est refroidi, ouvert, et l'ébauche obtenue par cette injection est retirée. L'insert structuré est conservé sur la surface structurée de cette ébauche de bracelet, pour servir de protection pour les étapes ultérieures de fabrication, notamment un ébavurage ou un sablage.

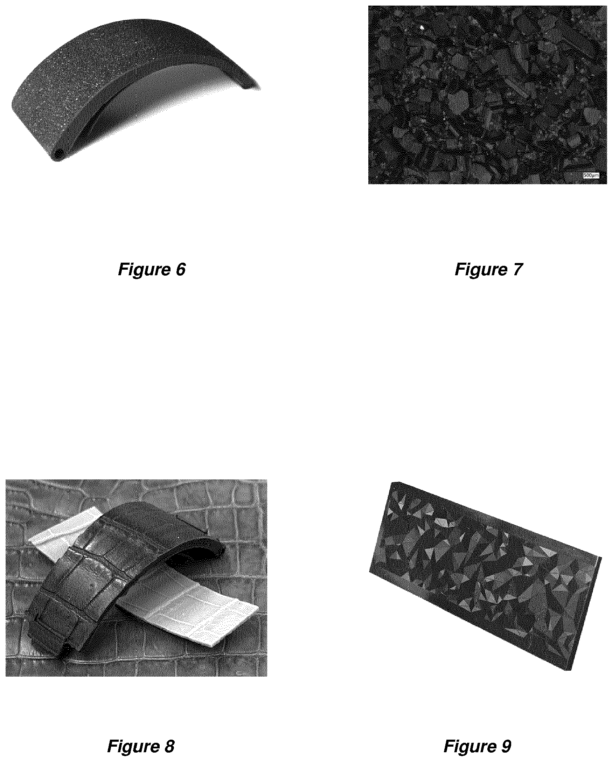

A l'issue de ce procédé, un brin de bracelet de montre bracelet est formé, comportant une surface structurée reproduisant fidèlement les motifs maîtres de la surface supérieure de la rondelle en carbure de silicium. En remarque, de tels motifs ne pourraient pas être obtenus par le biais d'un usinage conventionnel du moule. La figure 6 représente une vue en perspective de dessus du brin de bracelet fabriqué, dont la surface supérieure est structurée, reproduisant à l'identique le motif de la surface supérieure d'une partie de la rondelle de carbure de silicium. La figure 7 représente une vue agrandie de cette surface structurée du bracelet, permettant de bien distinguer son motif.

Selon un deuxième exemple de réalisation de l'invention, l'élément modèle est une peau d'alligator, ce qui permet d'obtenir un brin de bracelet en matériau élastomère tel que représenté par la figure 8.

Selon un troisième exemple de réalisation de l'invention, l'élément modèle est une plaque de métal dont une surface est gravée, représentée par la figure 9.

En remarque, des motifs dont la profondeur n'excède pas 500 $\mu$m ne peuvent pas être issus d'un moule usiné par les techniques conventionnelles. En effet, l'usinage pour obtenir un motif très fin sur une surface d'un composant horloger s'avère trop complexe à appliquer sur une surface courbe au sein d'un moule.

**Revendications**

1. Procédé de fabrication d'un insert structuré (10) pour un moule de fabrication d'un composant horloger ou de joaillerie, notamment pour la fabrication d'un brin de bracelet, **caractérisé en ce qu'**il comprend les étapes suivantes :

   ∘ Se munir (E1) d'un élément modèle (50) comprenant une surface structurée (51) avec un motif à reproduire sur une surface d'un composant horloger;
   ∘ Recouvrir (E2) ladite surface structurée (51) de l'élément modèle (50) avec une résine de moulage apte à reproduire un motif en négatif dudit motif de la surface structurée, et laisser solidifier la résine de moulage pour obtenir un insert structuré (10);
   ∘ Séparer (E3) l'insert structuré (10) de l'élément modèle (50), cet insert structuré (10) comprenant une surface comprenant ledit motif en négatif;
   ∘ Optionnellement, découper l'insert structuré (10) au format correspondant à au moins une partie du composant horloger à fabriquer.

2. Procédé de fabrication d'un insert structuré (10) selon la revendication précédente, **caractérisé en ce que** ledit motif à reproduire de l'élément modèle (50) comprend au moins un relief de hauteur, mesurée dans la direction perpendiculaire à ladite surface structurée de l'élément modèle, comprise entre 1 nm et 2 mm, voire entre 1 nm et 500 $\mu$m, voire entre 1 nm et 10 $\mu$m, voire entre 1 nm et 10 nm.

3. Procédé de fabrication d'un insert structuré selon l'une des revendications précédentes, **caractérisé en ce que** ledit motif à reproduire de l'élément modèle (50) comprend au moins une cavité dans ladite surface structurée dont l'ouverture est plus étroite que la plus grande largeur ou comprenant une section inférieure parallèle à la surface structurée d'aire plus importante qu'une autre section parallèle superposée au-dessus de la section inférieure.

4. Procédé de fabrication d'un insert structuré selon l'une des revendications précédentes, **caractérisé en ce que** la surface structurée de l'élément modèle (50) comprend :

   ∘ Un motif naturel issu directement d'un cuir, d'une peau, notamment d'une peau d'alligator, d'une feuille de végétal, de microcristaux, notamment de cristaux de ruthénium ou de carbure de silicium ; ou
   ∘ Un motif artificiel, formé à partir d'une plaquette de silicium gravée, ou d'un décor électroformé, ou d'un métal texturé par gravage ou par abrasion, ou d'un tissage de fibres.

5. Procédé de fabrication d'un insert structuré selon l'une des revendications précédentes, **caractérisé en ce que** la résine de moulage présente une viscosité avant solidification à température et pression ambiante comprise entre 0.5 et 70000 Pa.s$^{-1}$, voire entre 0.5 et 30000 Pa.s$^{-1}$, voire entre 0.5 et 1000 Pa.s$^{-1}$.

6. Procédé de fabrication d'un insert structuré selon l'une des revendications précédentes, **caractérisé en ce que** la résine de moulage comprend du polyuréthane, du latex, de la résine acrylique, du fluoroélastomère comme le FKM, une résine époxy, ou du silicone bi-composant, notamment à deux composants vulcanisant par addition, notamment de la famille des vinyl-polydimethyl-siloxanes, ou notamment comprenant du vinyle, de l'acide silicique et des matières d'agrégation.

7. Procédé de fabrication d'un insert structuré selon l'une des revendications précédentes, **caractérisé en ce que** la résine de moulage est solidifiée à plat ou est solidifiée à partir d'un élément modèle non plan.

8. Procédé de fabrication d'un insert structuré selon l'une des revendications précédentes, **caractérisé en ce que** l'insert structuré (10) présente une épaisseur maximale comprise entre 0.2 mm et 2 mm, voire entre 0.2 mm et 1 mm.

**9.** Procédé de fabrication d'un insert structuré selon l'une des revendications précédentes, **caractérisé en ce que** la solidification de la résine de moulage comprend une étape de polymérisation à température ambiante de durée comprise entre 1 et 30 minutes, voire entre 1 et 15 minutes.

**10.** Procédé de fabrication d'un insert structuré selon l'une des revendications précédentes, **caractérisé en ce que** l'insert structuré (10) présente une dureté comprise entre 20 et 90 Shore A, voire entre 20 et 40 Shore A ou entre 50 et 70 Shore A ou entre 80 et 90 Shore A.

**11.** Procédé de fabrication d'un insert structuré selon l'une des revendications précédentes, **caractérisé en ce qu'**il comprend une étape supplémentaire de dépôt d'un revêtement d'un agent démoulant sur l'insert structuré (10), notamment par enduction, dépôt chimique en phase vapeur (CVD) ou physique en phase vapeur (PVD), dépôt de couche atomique (ALD), dépôt sol-gel, ou dépôt SAM (Self Assembled Monolayer), ou de dépôt d'un revêtement fluoré sur l'insert structuré, comme un revêtement en un matériau parmi le polytétrafluoroéthylène (PTFE), l'éthylène propylène fluoré (FEP), ou le perfluoroalkoxy (PFA).

**12.** Procédé de fabrication d'un composant horloger ou de joaillerie, notamment un brin de bracelet, **caractérisé en ce qu'**il comprend une première phase de fabrication d'un insert structuré (10) selon l'une des revendications précédentes, et une deuxième phase de fabrication d'un composant horloger qui comprend les étapes suivantes :

⚬ Positionner (E4) l'insert structuré (10) dans un logement d'un moule (1) de fabrication d'un composant horloger;
⚬ Remplir (E5) le moule de fabrication incluant l'insert structuré d'un matériau du composant, incluant le remplissage du motif en négatif de l'insert structuré, puis laisser solidifier le matériau du composant pour obtenir une ébauche (20) du composant horloger comprenant une surface structurée comprenant ledit motif de l'élément modèle ;
⚬ Retirer (E6) l'ébauche (20) du composant horloger du moule (1) ;
⚬ Optionnellement terminer (E7) l'ébauche (20), comme par un ébavurage, un sablage, un marquage, ou une décoration.

**13.** Procédé de fabrication d'un composant horloger selon la revendication précédente, **caractérisé en ce que** l'étape consistant à retirer (E6) l'ébauche (20) du composant horloger du moule (1) comprend le retrait de l'ébauche (20) du composant horloger et de l'insert structuré (10) solidarisé à ladite ébauche (20) du composant horloger, puis **en ce qu'**il comprend optionnellement une étape consistant à terminer (E7) l'ébauche (20), comme par un ébavurage, un sablage, un marquage, ou une décoration, et **en ce qu'**il comprend une étape consistant à séparer (E8) le composant horloger de l'insert structuré (10).

**14.** Procédé de fabrication d'un composant horloger selon la revendication 12 ou 13, **caractérisé en ce que** l'étape consistant à remplir (E5) le moule de fabrication comprend le coulage ou l'injection du matériau du composant, et permet de former un composant horloger comprenant une surface structurée d'un seul tenant.

**15.** Procédé de fabrication d'un composant horloger selon l'une des revendications 12 à 14, **caractérisé en ce que** le composant horloger est flexible et présente une forme non plane au repos.

**16.** Procédé de fabrication d'un composant horloger selon l'une des revendications 12 à 15, **caractérisé en ce que** ledit matériau du composant horloger est un matériau à base d'élastomère, notamment d'un fluoro-élastomère (FKM, FFKM ou FEPM), ou d'un caoutchouc naturel (NR) ou synthétique (SBR, HNBR, EPDM).

**17.** Composant horloger en matériau élastomère, notamment brin de bracelet, **caractérisé en ce qu'**il comprend une partie monobloc et optionnellement d'un seul tenant, comprenant une surface structurée qui comprend tout ou partie des caractéristiques suivantes :

⚬ au moins un relief dont la hauteur, mesurée dans la direction perpendiculaire à ladite surface structurée, est comprise entre 1 nm et 2 mm, voire entre 1 nm et 500 $\mu$m, voire entre 1 nm et 10 $\mu$m, voire entre 1 nm et 10 nm ; et/ou
⚬ plusieurs reliefs qui se croisent, et/ou
⚬ au moins une cavité dont l'ouverture est plus étroite que sa plus grande largeur ou comprenant une section inférieure parallèle à la surface structurée d'aire plus importante qu'une autre section parallèle positionnée au-dessus de la section inférieure.

**18.** Ensemble comprenant un élément modèle (50) et un composant horloger selon la revendication précédente, **caractérisé en ce que** le composant horloger comprend une surface structurée qui reproduit une surface structurée de l'élément modèle avec une résolution inférieure ou égale à 1 µm, voire inférieure ou égale à 100 nm, voire inférieure ou égale à 10 nm, voire inférieure ou égale à 1 nm

**Figure 1**

**Figure 2a**          **Figure 2b**          **Figure 2c**          **Figure 2d**

Figure 3a

Figure 3b

Figure 3c

Figure 4

Figure 5

*Figure 6*

*Figure 7*

*Figure 8*

*Figure 9*

Europäisches
Patentamt

European
Patent Office

Office européen
des brevets

**RAPPORT DE RECHERCHE EUROPEENNE**

Numéro de la demande

EP 21 16 0550

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2019 058406 A (KTX CORP) 18 avril 2019 (2019-04-18) * alinéas [0034], [0035], [0012], [0020]; revendication 1; figures 1-2 * ----- | 1-18 | INV. B29C45/37 A44C5/00 |
| A | JP 2001 112517 A (ARII GOSEI KOGYOSHO KK) 24 avril 2001 (2001-04-24) * alinéas [0016] - [0020]; revendications 1-5 * ----- | 1-18 | |
| A | JP H06 312434 A (BANBI KK; KUREO KK; FUONTEN KK) 8 novembre 1994 (1994-11-08) * alinéas [0007], [0004]; figures 1-5 * ----- | 1-18 | |
| A | JP H07 8308 A (REGURUSU KK; FUONTEN KK; ARII CHEM KK) 13 janvier 1995 (1995-01-13) * alinéas [0004] - [0008]; revendications 1-4 * ----- | 1-18 | |
| A | JP S62 60510 A (CASIO COMPUTER CO LTD; KYOWA SEIKI KK) 17 mars 1987 (1987-03-17) * revendication 1; figures 1-3 * ----- | 1-18 | DOMAINES TECHNIQUES RECHERCHES (IPC) B29C A44C B29K B29L |
| A | CH 713 911 A2 (ROLEX SA [CH]) 28 décembre 2018 (2018-12-28) * alinéas [0006] - [0007], [0032] * ----- | 1-18 | |
| A | US 2005/089671 A1 (KUBOTA TAKESHI [JP]) 28 avril 2005 (2005-04-28) * alinéas [0005] - [0010]; revendications 1-3 * ----- | 1-18 | |
| A | US 2017/197345 A1 (OKAMOTO AKIO [JP]) 13 juillet 2017 (2017-07-13) * alinéas [0001], [0010], [0011], [0075], [0076], [0123] * ----- | 1-18 | |

Le présent rapport a été établi pour toutes les revendications

| Lieu de la recherche | Date d'achèvement de la recherche | Examinateur |
|---|---|---|
| Munich | 30 juillet 2021 | Ferrer Santos, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 16 0550

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-07-2021

| Document brevet cité au rapport de recherche | Date de publication | Membre(s) de la famille de brevet(s) | Date de publication |
|---|---|---|---|
| JP 2019058406 A | 18-04-2019 | AUCUN | |
| JP 2001112517 A | 24-04-2001 | AUCUN | |
| JP H06312434 A | 08-11-1994 | AUCUN | |
| JP H078308 A | 13-01-1995 | AUCUN | |
| JP S6260510 A | 17-03-1987 | AUCUN | |
| CH 713911 A2 | 28-12-2018 | CH 713911 A2<br>CN 109106011 A<br>EP 3418023 A1<br>JP 2019038252 A<br>US 2018370106 A1 | 28-12-2018<br>01-01-2019<br>26-12-2018<br>14-03-2019<br>27-12-2018 |
| US 2005089671 A1 | 28-04-2005 | EP 1114713 A1<br>KR 20010052757 A<br>TW 440519 B<br>US 2005089671 A1<br>WO 0064660 A1 | 11-07-2001<br>25-06-2001<br>16-06-2001<br>28-04-2005<br>02-11-2000 |
| US 2017197345 A1 | 13-07-2017 | CA 2950061 A1<br>JP 5854178 B1<br>JP 6617527 B2<br>JP 2016094005 A<br>JP WO2015182162 A1<br>KR 20170010014 A<br>US 2017197345 A1<br>WO 2015182162 A1 | 03-12-2015<br>09-02-2016<br>11-12-2019<br>26-05-2016<br>20-04-2017<br>25-01-2017<br>13-07-2017<br>03-12-2015 |

EPO FORM P0460

Pour tout renseignement concernant cette annexe : voir Journal Officiel de l'Office européen des brevets, No.12/82

**EP 4 052 883 A1**

## RÉFÉRENCES CITÉES DANS LA DESCRIPTION

### Documents brevets cités dans la description

- EP 2783592 A1